# FASCICULE DE BREVET EUROPEEN

(11) **EP 1 828 257 B1**
(45) Date de publication et mention de la délivrance du brevet: **13.01.2010**
(21) Numéro de dépôt: 05817355.0
(22) Date de dépôt: 08.11.2005
(51) Int. Cl.: C08F 2/38, C04B 24/26, C08F 2/16

(54) **DISPERSANTS ACRYLIQUES HYDROSOLUBLES OU HYDRODISPERSIBLES OBTENUS PAR POLYMERISATON RADICALAIRE CONTROLEE**
DURCH KONTROLLIERTE RADIKALPOLYMERISATION ERHÄLTLICHE WASSERLÖSLICHE ODER WASSERDISPERGIERBARE ACRYLDISPERGIERMITTEL
WATER-SOLUBLE OR WATER DISPERSIBLE ACRYLIC DISPERSING AGENTS OBTAINABLE BY CONTROLLED RADICAL POLYMERISATION

(30) Priorité: 09.11.2004 FR 0411945
(43) Date de publication de la demande: 05.09.2007
(73) Titulaire: ARKEMA FRANCE, 92700 Colombes (FR)
(72) Inventeur: HIDALGO, Manuel, F-69530 Brignais (FR); MAGNET, Stéphanie, F-64370 Morlanne (FR); GUERRET, Olivier, F-69890 La Tour De Salvagny (FR)
(74) Mandataire: Lhoste, Catherine
(86) Numéro de dépôt international: PCT/FR2005/002789
(87) Numéro de publication internationale: WO 2006/051216

(56) Documents cités:
- EP-A- 0 753 488
- EP-A- 1 142 847

## Description

### Domaine de l'invention

La présente invention concerne des dispersants acryliques hydrosolubles ou hydrodispersibles obtenus par polymérisation radicalaire contrôlée. Elle concerne plus particulièrement un procédé spécifique en milieu aqueux pour la synthèse de polymères dispersants de particules minérales telles que le ciment, le sable et les granulats minéraux, les polymères dispersants obtenus et l'utilisation de ces dispersants dans des formulations à base de liants hydrauliques comme le ciment, le mortier ou le béton, ou dans d'autres formulations contenant des particules minérales comme le sable ou les granulats minéraux. Le procédé de synthèse en milieu aqueux par polymérisation radicalaire faisant l'un des objets de l'invention présente l'énorme avantage de permettre l'obtention de copolymères dispersants à distribution de masses moléculaires mieux contrôlée que lorsque des procédés classiques sont utilisés et ceci sans l'aide d'agents de transfert de chaîne, par ailleurs pratiquement indispensables dans tout procédé classique de synthèse de dispersants par polymérisation en milieu aqueux. De plus, la demanderesse a trouvé que les dispersants ou fluidifiants polymères fabriqués en utilisant le procédé d'obtention faisant l'un des objets de l'invention avaient des performances supérieures à celles obtenues avec des produits existant commercialement.

### L'art antérieur et le problème technique

En matière de dispersants, aussi appelés fluidifiants pour particules minérales et, en particulier, pour liants hydrauliques comme le ciment, le mortier ou le béton, il existe une catégorie de produits dont les performances en termes de fluidification du mélange à base de liant hydraulique sont remarquables, c'est-à-dire qu'ils permettent une bonne fluidification du mélange avec des proportions de dispersant relativement faibles. De par ces bonnes performances, ces produits permettent de préparer des mélanges de bonne fluidité avec un apport réduit d'eau, d'où le terme employé dans le métier, de « haut-réducteurs d'eau » pour les décrire. Cette catégorie de produits est aussi connue comme celle des « superplastifiants » et elle comporte essentiellement deux types de familles de produits commerciaux, selon leur nature chimique. De nombreux ouvrages tels que le livre de V.S. RAMACHANDRAN, V.M. MALHOTRA, C. JOLICOEUR et N. SPIRATOS, intitulé Superplasticizers: Properties and Applications in Concrete publié par le Materials Technology Laboratory, CANMET ; Natural Ressources Canada copyright Minister of Public Works, and Government Services, Canada 1998, décrivent ces deux familles de produits comme étant, d'une part, celle des polymères sulphonés et d'autre part, celle des polycarboxylates. La famille des polymères sulphonés inclut les polynaphtalène sulphonates et les polymélamine sulphonates, connus également comme les produits de la condensation du formaldehyde avec le naphtalène sulphonate et le mélamine sulphonate, respectivement. Ces produits tendent de nos jours à être remplacés par la deuxième famille importante de superplastifiants commerciaux, les polycarboxylates, dont les performances sont, dans la majorité des cas, largement supérieures.

Dans la plupart des cas, le terme « polycarboxylates » fait référence à des copolymères dits « en peigne », dans la structure moléculaire desquels on peut distinguer :
- une chaîne principale hydrocarbonée et comportant des groupes ionisables (du type de ceux issus de la polymérisation ou copolymérisation des acides acrylique et/ou méthacrylique, maléïque et/ou fumarique, etc.) et
- des chaînes polymères latérales non chargées comportant des séquences de polyoxyde d'éthylène entre autres ou exclusivement.

Il existe deux méthodes principales permettant de synthétiser ces molécules de copolymères à chaînes latérales ou « en peigne ».

La première méthode, qui est la plus directe pour l'homme du métier, consiste en la copolymérisation de monomères, par exemple de type acrylique ou méthacrylique d'au moins deux types différents : ceux, acides, comportant les groupes ionisables donnant lieu en milieu basique à des charges négatives sur la chaîne principale, et ceux, attachées auxquels par des fonctions chimiques comme les esters ou les amides, se trouvent des chaînes oxyéthylénées donnant lieu aux chaînes latérales. C'est cette première méthode qui est utilisée dans le procédé de l'invention.

La deuxième méthode, en deux étapes, consiste en la synthèse, d'abord, de la chaîne principale comportant les groupes ionisables et au rattachement, ensuite, à cette chaîne principale, des chaînes latérales, par des réactions chimiques entre des groupes fonctionnels de la chaîne principale (comme des groupes acides) et des groupes fonctionnels associés aux chaînes latérales à rattacher, tels que des groupes alcool (estérification avec les acides de la chaîne principale), amine (amidation avec les acides de la chaîne principale) ou autres.

L'obtention des copolymères « en peigne » par la première méthode décrite ci-dessus se fait, le plus souvent, par une réaction de copolymérisation radicalaire en milieu majoritairement aqueux, selon des méthodes bien connues de l'homme du métier. Outre le choix des monomères à faire copolymériser et leur composition relative, un aspect très important de ces copolymérisations est le contrôle des masses moléculaires moyennes et de la distribution des masses moléculaires, car ces deux variables sont liées intimement aux propriétés d'application des produits obtenus. C'est ainsi, par exemple, que le brevet US 6376581 décrit la méthode de production d'un dispersant de ciment composé de polymères de type polyacide carboxylique dont: a) les masses moléculaires moyennes en poids se situent entre 10,000 et 500,000 g/mol (par rapport à des étalons de polyéthylène glycol et selon une méthode de mesure par chromatographie de perméation de gel, ou GPC) et b) la différence entre la masse moléculaire moyenne en poids et la masse moléculaire au sommet du pic (*M̅w̅*-Mp) est comprise entre 0 et 8000. La différence *M̅w̅*-Mp inférieure ou égale à 8000 traduit une certaine étroitesse de la distribution des masses moléculaires, décrite comme nécessaire aux bonnes performances des dispersants revendiqués dans la demande US 6376581. Or la demande US 6376581 décrit des polymères qui sont préparés par un procédé de polymérisation radicalaire conventionnelle dont la tendance est à conduire naturellement à des distributions des masses moléculaires relativement larges et ce d'autant plus que les masses moléculaires majoritaires (ou au sommet de la distribution des masses, Mp) recherchées sont grandes.

Il est, par ailleurs, bien connu de l'homme du métier que le contrôle des masses moléculaires des polymères fabriqués par des méthodes de polymérisation radicalaire conventionnelles en milieu aqueux comme celle décrite dans la demande US 6376681 et dans d'autres demandes de brevets utilisant ce type de polymérisation comme, par exemple, la demande de brevet PCT No. WO 01-74736 A1 ou la demande de brevet européen no. EP 1 136 507 A1, requiert l'utilisation d'agents ou de systèmes chimiques de contrôle des masses moléculaires, comme les agents de transfert de chaîne dont le rôle est de limiter la valeur de la masse moléculaire moyenne des polymères obtenus, de manière à fabriquer des polymères utiles aux applications de la dispersion de particules minérales et, plus particulièrement des particules cimentaires. La demande EP 1 136 507 A1, par exemple, situe la zone de préférence en termes de masse moléculaire moyenne pour des dispersants pour ciment, entre 1000 et 30000 daltons (ou g/mole) pour la masse moléculaire moyenne en nombre ou *M̅n̅*. Le texte de cette demande explique que lorsque les masses moléculaires moyennes sont trop élevées (par exemple *M̅n̅*> 30 000 g/mole), les performances en termes de fluidification des polymères dispersants ne sont pas optimales. Il y est expliqué, également, que lorsque les masses moléculaires moyennes sont trop faibles, le pouvoir dispersant ou fluidifiant des polymères se voit diminuer, tout comme la propriété qu'ont certains de ces polymères à maintenir fluides les mélanges à base de ciment pendant un certain temps qui va de quelques fractions d'heure à quelques heures. Cependant dans cette demande la polymérisation est effectuée avec des initiateurs radicalaires conventionnels et des agents de transfert de chaîne.

La limitation des masses moléculaires à des valeurs moyennes compatibles avec les bonnes performances des polymères en tant que dispersants et, en particulier, en tant que dispersants pour les préparations à base de ciment, lorsque les procédés ou méthodes de préparation de ces polymères font appel à la polymérisation radicalaire classique en milieu aqueux est, donc, le plus souvent obtenue par l'utilisation d'agents de transfert de chaîne bien connus en polymérisation radicalaire. Outre l'inconvénient de devoir ajouter au moins un ingrédient supplémentaire lors des étapes de polymérisation, certains des agents de transfert les plus efficaces en milieu aqueux ont d'autres inconvénients qui peuvent être leur difficulté de manipulation du fait de leur caractère toxique ou odorant. Toujours de manière à limiter les masses moléculaires moyennes des polymères obtenus en milieu aqueux, d'autres stratégies basées sur la nature même de la polymérisation radicalaire classique peuvent être employées en combinaison avec (ou en substitution de) l'utilisation d'agents de transfert de chaîne. Ces stratégies qui ne sont pas exemptes d'inconvénients peuvent être, par exemple, l'utilisation de températures de polymérisation les plus hautes possibles (ce qui a tendance à limiter naturellement les masses moléculaires par la modification relative des valeurs des constantes cinétiques de terminaison et de propagation de chaîne), mais cela est souvent coûteux en termes d'énergie et réduit les marges de sécurité en cas des pertes de contrôle de la polymérisation (réaction exothermique). L'utilisation de quantités importantes d'amorceurs de polymérisation radicalaire est également un moyen d'essayer de limiter les masses moléculaires, mais il peut s'avérer coûteux et également réducteur des marges de sécurité en cas des pertes de contrôle de la réaction exothermique de polymérisation. D'autres moyens de limiter les masses moléculaires peuvent consister à travailler en milieu assez dilué ou à stopper les réactions de polymérisation à des conversions de monomères incomplètes pour défavoriser la formation de hautes masses moléculaires en fin de réaction ou à utiliser des procédés d'addition en semi-continu des monomères avec des temps d'ajout assez longs ; toutefois, ces stratégies ont l'inconvénient d'impacter la productivité de la méthode de préparation et, de ce fait, d'augmenter le coût de production total des dispersants polymères.

Par ailleurs, la tendance naturelle de la polymérisation radicalaire classique en milieu aqueux concentré à donner des distributions de masses moléculaires d'autant plus larges que les masses moléculaires moyennes visées sont élevées est l'une des raisons principales qui obligent l'homme du métier à essayer de restreindre les masses moléculaires moyennes par l'utilisation des agents de contrôle de masses et/ou d'autres stratégies convergentes comme celles citées dans le paragraphe précédent. Autrement dit, la polymérisation radicalaire classique en milieu aqueux ne permet pas d'obtenir des molécules ayant de bonnes propriétés dispersantes avec, à la fois, des masses moléculaires moyennes relativement élevées (typiquement ayant des *M̅n̅* supérieures à 25000) et de faibles largeurs de la distribution des masses moléculaires.

On a maintenant trouvé qu'on pouvait préparer en solution aqueuse ou en dispersion aqueuse des polymères de type polyacide carboxylique par polymérisation radicalaire contrôlée sans utiliser d'agent de transfert de chaine et qu'on obtenait un indice de polydispersité *M̅w̅*/ *M̅n̅* avantageusement < 2 et *M̅n̅* compris entre 10000 et 50000.

On a aussi trouvé qu'on pouvait préparer en solution en dispersion aqueuse des polymères de type polyacide carboxylique par polymérisation radicalaire contrôlée sans utiliser d'agent de transfert de chaîne pour convertir au moins 60% des monomères suivie d'une polymérisation radicalaire conventionnelle et qu'on obtenait un indice de polydispersité *M̅w̅ l M̅n̅ <* 6, avantageusement < 5, de préférence < 4 et *M̅w̅* compris entre 10000 et 500000 et avantageusement entre 30000 et 150000. Avantageusement à la fin de la polymérisation radicalaire contrôlée on obtient un indice de polydispersité *M̅w̅* / *M̅n̅* < 2 et *M̅n̅* compris entre 10000 et 50000.

Les polymères obtenus sont utiles comme dispersants des particules minérales telles que le ciment. Ils sont utiles aussi comme additifs fluidifiants ou en mélange avec d'autres polymères de compositions de particules minérales et plus particulièrement à base de ciment telles que, par exemple, les coulis de ciment, les mortiers et les bétons ou encore comme additifs fluidifiants dans des compositions cosmétiques contenant des charges et/ou des pigments insolubles dans l'eau, les solvants et les huiles cosmétiques, ou encore dans des compositions céramiques. Les produits de l'invention ont de meilleures propriétés que ceux de l'art antérieur. Les polymères de l'invention s'utilisent en solution ou dispersion aqueuse et avantageusement sous forme de la solution ou dispersion dans laquelle on les a synthétisés ou des dilutions faites à partir de cette solution ou dispersion. Ils peuvent également être utilisés sous forme de poudre après séchage, par exemple par atomisation, de la solution ou dispersion dans laquelle ils ont été synthétisés. Pour l'utilisation dans le ciment ou comme additifs fluidifiants de compositions de particules minérales il est nécessaire qu'il reste le moins possible de monomères non polymérisés dans la solution. Les polymères obtenus sont utiles aussi éventuellement en mélange avec d'autres produits ou d'autres polymères dans des formulations cosmétiques, de peintures ou de céramiques.

### Brève description de l'invention

Selon une première forme la présente invention concerne un procédé de préparation en solution aqueuse ou en dispersion de polymères acryliques hydrosolubles ou hydrodispersibles ans lequel on copolymérise, le total des comonomères étant 100% en moles:
5 à 70 %, avantageusement 5 à 50 % de monomère(s) (A) de la famille des (méth)acrylates de (alkoxy)polyalkylène glycol et/ou de la famille des (méth)acrylamides de (alkoxy)polyalkylène glycol,
5 à 95 %, avantageusement 20 à 95%, de monomère(s) (B) carboxylique(s) insaturé(s),
0 à 85 %, avantageusement 0 à 65%, de monomère(s) (C) hydrophobe(s) peu soluble(s) dans l'eau,
en l'absence d'agent de transfert de chaîne,
en présence d'une quantité suffisante d'une alcoxyamine soluble dans l'eau jusqu'à obtenir une conversion d'au moins 90%, avantageusement 93%, en poids des monomères (A), (B) et (C).

L'alcoxyamine joue le rôle d'amorceur et de contrôleur de la polymérisation d'où le nom de polymérisation radicalaire contrôlée.

Ces polymères ont un indice de polydispersité *M̅w̅* / *M̅n̅* avantageusement < 2 et *M̅n̅* compris entre 10000 et 50000.

L'invention concerne aussi la solution aqueuse ou la dispersion de polymère acrylique hydrosoluble ou hydrodispersible btenue par le procédé ci dessus, ainsi que toute dilution faite à partir de cette solution ou dispersion et toute concentration faite également à partir de cette solution ou dispersion y compris celle qui implique le séchage jusqu'à l'obtention du polymère (qui était présent dans la solution ou dispersion) sous forme d'une poudre sèche ou humide.

On ne sortirait pas du cadre de l'invention si on ajoutait des quantités non significatives d'agent de transfert de chaîne ou si l'un des monomères (A), (B) et (C) avait des fonctions de transfert de chaîne ou générait un agent de transfert de chaîne en quantités non significatives.

Ces polymères sont aussi des produits nouveaux en eux mêmes quelque soit leur procédé de préparation. Ainsi la présente invention concerne une solution aqueuse de polymère acrylique hydrosoluble ou une dispersion aqueuse de polymère acrylique hydrodispersible comprenant, le total des comonomères étant 100% en moles:
5 à 70 %, avantageusement 5 à 50 % de monomère(s) (A) de la famille des (méth)acrylates de (alkoxy)polyalkylène glycol et/ou de la famille des (méth)acrylamides de (alkoxy)polyalkylène glycol,
5 à 95 %, avantageusement 20 à 95%, de monomère(s) (B) carboxylique(s) insaturé(s),
0 à 85 %, avantageusement 0 à 65%, de monomère(s) (C) hydrophobe(s) peu soluble(s) dans l'eau,
ledit polymère ayant un indice de polydispersité *M̅w̅ l M̅n̅* avantageusement < 2 et *M̅n̅* compris entre 10000 et 50000.

L'invention concerne aussi toute dilution faite à partir de cette solution ou dispersion et toute concentration faite également à partir de cette solution ou dispersion y compris celle qui implique le séchage jusqu'à l'obtention du polymère (qui était présent dans la solution ou dispersion) sous forme d'une poudre sèche ou humide.

Selon une deuxième forme la présente invention concerne un procédé de préparation en solution aqueuse de polymères acryliques hydrosolubles ou un procédé de préparation en dispersion aqueuse de polymères acryliques hydrodispersibles, dans lequel on copolymérise, le total des comonomères étant 100% en moles:
5 à 70 %, avantageusement 5 à 50 % de monomère(s) (A) de la famille des (méth)acrylates de (alkoxy)polyalkylène glycol et/ou de la famille des (méth)acrylamides de (alkoxy)polyalkylène glycol,
5 à 95 %, avantageusement 20 à 95%, de monomère(s) (B) carboxylique(s) insaturé(s),
0 à 85 %, avantageusement 0 à 65%, de monomère(s) (C) hydrophobe(s) peu soluble(s) dans l'eau,
en l'absence d'agent de transfert de chaîne,
en présence d'une quantité suffisante d'une alcoxyamine soluble dans l'eau jusqu'à obtenir une conversion d'au moins 50%, avantageusement 60%, en poids des monomères (A), (B) et (C),
puis on termine la polymérisation en présence d'un initiateur radicalaire conventionnel,
éventuellement en présence d'un agent de transfert de chaîne,
jusqu'à obtenir une conversion d'au moins 90%, avantageusement 93%, en poids des monomères (A), (B) et (C).

L'invention concerne aussi la solution ou dispersion aqueuse de polymère acrylique hydrosoluble (hydrodispersible) obtenue par le procédé ci dessus, ainsi que toute dilution faite à partir de cette solution ou dispersion et toute concentration faite également à partir de cette solution ou dispersion y compris celle qui implique le séchage jusqu'à l'obtention du polymère (qui était présent dans la solution ou dispersion) sous forme d'une poudre sèche ou humide.

Le polymère acrylique en solution aqueuse ou dispersion possède un indice de polydispersité *M̅w̅* / *M̅n̅* < 6, avantageusement < 5, de préférence < 4 et *M̅w̅* compris entre 10000 et 500000 et avantageusement entre 30000 et 150000. Avantageusement à la fin de la polymérisation radicalaire contrôlée on obtient un indice de polydispersité *M̅w̅* / *M̅n̅* < 2 et *M̅n̅* compris entre 10000 et 50000.

On ne sortirait pas du cadre de l'invention si on ajoutait des quantités non significatives d'agent de transfert de chaîne ou si l'un des monomères (A), (B) et (C) avait des fonctions de transfert de chaîne ou générait un agent de transfert de chaîne en quantités non significatives.

Ces polymères sont aussi des produits nouveaux en eux mêmes quelque soit leur procédé de préparation. Ainsi la présente invention concerne une solution aqueuse ou dispersion aqueuse de polymère acrylique hydrosoluble ou hydrodispersible comprenant, le total des comonomères étant 100% en moles:
5 à 70 %, avantageusement 5 à 50 % de monomère(s) (A) de la famille des (méth)acrylates de (alkoxy)polyalkylène glycol et/ou de la famille des (méth)acrylamides de (alkoxy)polyalkylène glycol,
5 à 95 %, avantageusement 20 à 95%, de monomère(s) (B) carboxylique(s) insaturé(s),
0 à 85 %, avantageusement 0 à 65%, de monomère(s) (C) hydrophobe(s) peu soluble(s) dans l'eau,
ledit polymère ayant un indice de polydispersité *M̅w̅* / *M̅n̅* < 6, avantageusement < 5, de préférence < 4 et *M̅w̅* compris entre 10000 et 500000 et avantageusement entre 30000 et 150000.

L'invention concerne aussi toute dilution faite à partir de cette solution ou dispersion et toute concentration faite également à partir de cette solution ou dispersion y compris celle qui implique le séchage jusqu'à l'obtention du polymère (qui était présent dans la solution ou dispersion) sous forme d'une poudre sèche ou humide.

Les polymères de l'invention s'utilisent en solution ou dispersion aqueuse et avantageusement sous forme de la solution ou dispersion dans laquelle on les a syntétisés ou des dilutions obtenues à partir de cette solution ou dispersion. Les polymères de l'invention peuvent, également, être utilisés sous forme de poudre après séchage, par exemple par atomisation, de la solution ou dispersion dans laquelle ils ont été synthétisés.

L'invention concerne l'utilisation de ces polymères comme dispersants des particules minérales telles que le ciment.

L'invention concerne aussi l'utilisation de ces polymères comme additifs fluidifiants de compositions de particules minérales et plus particulièrement à base de ciment telles que, par exemple, les coulis de ciment, les mortiers et les bétons. L'invention concerne aussi l'utilisation de ces polymères en mélange avec d'autres polymères, notamment pour les fluidifier, dans des compositions de particules minérales et plus particulièrement à base de ciment, telles que les coulis de ciment, les mortiers et les bétons. L'invention concerne aussi les ciments contenant ces dispersants.

Les polymères de l'invention sont utiles aussi, éventuellement en mélange avec d'autres produits ou d'autres polymères notamment dans des formulations (ou compositions) cosmétiques, de peintures ou de céramiques. L'invention concerne aussi ces compositions cosmétiques, de peintures ou de céramiques.

L'invention concerne aussi les objets finis obtenus à partir de des compositions ci-dessus.

Les masses *M̅w̅* et *M̅n̅* de la présente invention sont exprimées en équivalent polyéthylène glycol et mesurées par Chromatographie d'Exclusion Stérique, SEC, technique également connue sous le nom de GPC pour l'abréviation en anglais de Chromatographie de Perméation de Gel. Les polymères de l'invention sont caractérisés en termes des masses moléculaires en faisant passer des solutions diluées les contenant, à travers une chaîne de SEC « aqueuse » comprenant:
- un jeu de colonnes, par exemple, des colonnes TSK PW XL de 300 x 7 placées selon l'ordre : pré-colonne en tête type 2500 de 70x7, puis chaîne 6000/2500/3000/4000 dans cet ordre,
- une pompe, par exemple, SHIMADZU LC 10
- des détecteurs comme par exemple, un détecteur réfractométrique différentiel (par exemple, un RI 4 VARIAN avec cellule thermostaté à 35°C) et/ou un détecteur spectroscopique UV (par exemple un UV 2050 VARIAN),
- un four à effet Pelletier comme par exemple un JETSTREAM de JASCO,
- une vanne d'injection, par exemple, Rhéodyne.

La distribution des masses moléculaires est ainsi obtenue selon le pouvoir séparateur du système des colonnes en termes de temps de rétention dans les colonnes, et pour obtenir des valeurs des masses moléculaires, un étalonnage est fait avec, le plus souvent, des étalons de polyéthylène glycol de telle sorte que les masses moléculaires moyennes seront exprimées en équivalent polyéthylène glycol.

Dans ce texte les termes "polymère" et "copolymère" sont utilisés indistinctement pour se référer aux dispersants de l'invention.

### Description détaillée de l'invention

### On décrit d'abord la première forme de l'invention.

**S'agissant des monomères (A),** on peut citer les acrylates et les méthacrylates de méthoxypolyéthylène glycol, les méthoxypolyéthylène glycol acrylamides et méthacrylamides, les acrylates et méthacrylates de méthoxy poly(propylène-*bloc*-éthylène) glycol, les méthoxy poly(propylène-*bloc*-éthylène) glycol acrylamides et méthacrylamides, les acrylates et méthacrylates d'éthoxypolyéthylène glycol, les éthoxypolyéthylène glycol acrylamides et méthacrylamides, les acrylates et méthacrylates d'éthoxy poly(propylène-*bloc-*éthylène) glycol et les éthoxy poly(propylène-*bloc*-éthylène) glycol acrylamides et méthacrylamides. La longueur totale de la chaîne latérale de polyalkylène glycol est avantageusement telle que la masse moléculaire moyenne *M̅n̅* de cette chaîne latérale soit comprise entre 350 et 10000 g/mole et, de préférence, entre 1000 et 6000 g/mole. Parmi ces monomères on préfère l'acrylate et le méthacrylate de méthoxypolyéthylène glycol de chaîne latérale polyéthylène glycol de masse molaire moyenne en nombre comprise entre 900 et 5100 et de manière plus préférentielle de masse molaire moyenne en nombre comprise entre 1800 et 2200.

**S'agissant des monomères (B),** on peut citer à titre d'exemple les acides acrylique, méthacrylique et itaconique, ainsi que les anhydrides maléïque et fumarique et les anhydrides acrylique et méthacrylique. On préfère l'acide acrylique et l'acide méthacrylique.

**S'agissant des monomères (C),** on peut citer à titre d'exemple les esters acryliques et méthacryliques, les monomères styréniques ou vinyliques. On préfère les méthacrylates d'alkyle.

**S'agissant de la polymérisation,** le procédé de synthèse des copolymères de l'invention est un procédé mettant en jeu la technique de Polymérisation Radicalaire Contrôlée. A titre d'exemple d'alcoxyamine on peut citer celle décrite dans le brevet W02004/014926, dont l'entité nitroxyde joue le rôle d'agent de contrôle de la polymérisation. l'alcoxyamine utilisée est avantageusement l'acide 2-Methyl-2-[N-tertbutyl-N-(diéthoxy-phosphoryl-2,2-diméthylpropyl) aminoxy] propionique et ses sels métalliques et ammoniacaux, dont ceux de sodium, potassium et ammonium. Cette alcoxyamine sera désignée dans ce qui suit sous l'abréviation MAMA. Le milieu de polymérisation est l'eau ou des mélanges de solvants à base d'eau.

Le mélange de monomères peut être introduit en une seule fois avant le démarrage de la réaction de polymérisation (mode dit « batch »), ou alors suivant un mode d'addition dit en « semi-continu » qui consiste en l'introduction progressive des monomères dans le réacteur de polymérisation et alors que la réaction de polymérisation a été amorcée, en un temps d'addition déterminé et qui est le plus souvent compris entre quelques minutes et plusieurs heures. La réaction de polymérisation est amorcée grâce à l'alcoxyamine (MAMA). L'alcoxyamine MAMA est une poudre fine de couleur blanche qui doit être dissoute dans l'eau par neutralisation du groupe acide avec une base, et de préférence avec une base forte. L'opération de neutralisation de la MAMA peut se faire dans le réacteur de polymérisation contenant un pied de cuve d'eau, avant l'ajout des monomères ou alors, des solutions aqueuses de MAMA neutralisé peuvent être préparées séparément pour être utilisées en un seul ajout au réacteur au début de la polymérisation ou bien en ajouts différés pendant la polymérisation, ou bien, encore, en ajout de type « semi-continu » pendant la polymérisation, et en parallèle à l'ajout de monomères lorsqu'un mode d'addition des monomères de type « semi-continu » est choisi. Ce dernier mode d'addition de la MAMA en « semi-continu » et en parallèle à l'ajout des monomères, est tel que le ratio des quantités de monomère et de MAMA qui entrent dans le réacteur de polymérisation est gardé constant.

La température de polymérisation est comprise entre 25 et 100°C, et de préférence entre 40 et 80°C, pendant toute la durée de la polymérisation radicalaire contrôlée qui va le plus souvent de 2 à 8 heures.

Les dispersants ou fluidifiants obtenus selon le procédé de l'invention, se présentent, le plus souvent, sous la forme de solutions ou dispersions aqueuses contenant un taux de solide mesuré selon des méthodes d'évaporation des espèces volatiles bien connues de l'homme du métier. Avantageusement ce taux est compris entre 10 et 60%, et de préférence entre 20 et 50%. Par différence de poids entre le poids de la solution ou dispersion aqueuse et celui du résidu sec après évaporation, on détermine un pourcentage d'extrait sec, qui est une caractéristique nécessaire pour connaître le dosage en matière dispersante effective utilisé dans les compositions à base de particules minérales, lorsque la solution ou dispersion aqueuse de fluidifiant est utilisée telle quelle. La viscosité de la solution ou de la dispersion aqueuse de fluidifiant constitue une caractéristique mesurable à l'aide de rhéomètres comme le viscosimètre Brookfield, bien connu de l'homme du métier. Cette viscosité dépend de manière quelque peu complexe, du degré de conversion des monomères en polymère dans la solution ou dispersion aqueuse, ainsi que des masses moléculaires des molécules de polymère dans la solution ou dispersion aqueuse. D'autres techniques comme la résonance magnétique nucléaire (RMN) ou les techniques de séparation chromatographique, peuvent être utilisées pour estimer le degré de conversion des monomères en polymère. La faible volatilité de certains monomères susceptibles d'être utilisés pour la synthèse des dispersants de l'invention rend inexacte l'estimation de la conversion des monomères en polymère par l'extrait sec de la solution ou dispersion aqueuse.

**On décrit maintenant la deuxième forme de l'invention.** La différence essentielle avec la première forme est qu'au lieu d'effectuer toute la conversion (polymérisation) des monomères par polymérisation radicalaire contrôlée on commence en radicalaire contrôlée et on termine la polymérisation en polymérisation radicalaire conventionnelle (c'est-à-dire avec des peroxydes, des persulfates, des azoïques ou leurs équivalents). Les monomères qu'on polymérise en radicalaire conventionnelle peuvent être déjà présents au cours de la polymérisation radicalaire contrôlée et n'ont pas été convertis ou bien on les ajoute dans la solution ou dispersion aqueuse contenant la partie du dispersant déjà préparée par polymérisation radicalaire contrôlée ou bien encore c'est une combinaison de ces possibilités. Pour effectuer cette polymérisation radicalaire conventionnelle on ajoute, dans la solution ou dispersion aqueuse contenant la partie du dispersant déjà préparée par polymérisation radicalaire contrôlée, des générateurs de radicaux classiques bien connus de l'homme du métier et utilisés fréquemment lors des réactions de polymérisation radicalaire classique en milieu aqueux. Parmi ces générateurs de radicaux, on peut citer de manière non exclusive, les sels métalliques et ammoniacaux du persulfate, tels que le persulfate de sodium, le persulfate de potassium et le persulfate d'ammonium, les amorceurs azoïques hydrosolubles tels que le 2,2'-Azobis (2-amidinopropane) dihydrochlorure et les sels métalliques et ammoniacaux de l'acide 4,4' Azobis(4-cyanopentanoïque), les couples redox tels que le couple persulfate (de sodium, potassium ou ammonium)/vitamine C ou le couple persulfate/métabisulfite de sodium ou potassium ou le couple eau oxygénée/sels de l'ion ferreux ou le couple tertiobutyle hydroperoxyde/sulfoxylate de sodium, ainsi que toute autre combinaison possible oxydant(s)/réducteur(s). Lorsque la quantité de monomères résiduels à convertir après la réaction de polymérisation radicalaire contrôlée est considérable, l'utilisation d'amorceurs de polymérisation radicalaire classique conduira à des solutions ou dispersions aqueuses d'un mélange de copolymères d'origines différentes, ceux obtenus par polymérisation radicalaire classique et ceux obtenus par polymérisation radicalaire contrôlée. Pour cette étape de polymérisation radicalaire classique, il n'est pas exclu d'utiliser des agents de transfert de chaîne comme ceux utilisés classiquement dans la polymérisation radicalaire classique en milieu aqueux, même si, avantageusement, on n'en utilise pas. Parmi les agents de transfert utilisés dans des polymérisations radicalaires classiques, on peut citer, à titre non exclusif, l'isopropanol, les mercaptans hydrosolubles comme l'acide thioglycolique ou l'acide mercaptopropionique ou le mercapto-éthanol. La demanderesse a trouvé que ces mélanges de copolymères d'origines différentes, pouvaient avoir de bonnes propriétés de dispersion ou de fluidification de particules minérales malgré des distributions globales de masses moléculaires pour lesquelles des dispersants obtenus exclusivement par polymérisation radicalaire classique ne conduisent pas à de bonnes propriétés de dispersion.

**S'agissant de l'utilisation des polymères de l'invention,** ils permettent de donner une bonne fluidité à des dispersions aqueuses de particules minérales, et plus particulièrement, à des compositions à base de liants hydrauliques comme le ciment. Un autre objet de la présente invention est constitué par l'utilisation des polymères de l'invention comme dispersants ou fluidifiants dans des compositions à base de particules minérales et plus particulièrement de liants hydrauliques comme le ciment.

Le pouvoir dispersant ou fluidifiant des polymères de l'invention peut être testé en préparant des compositions à base de particules minérales contenant le(s) dit(s) fluidifiant(s). L'une de ces compositions est le mortier de ciment, obtenu en mélangeant du ciment, du sable normalisé, de l'eau et la solution ou dispersion aqueuse contenant les polymères dispersants de l'invention, éventuellement additivée, par exemple, d'agents anti-mousse. Différents types de tests peuvent, ensuite, être réalisés sur ces compositions de mortier. Deux types de mesures, particulièrement pertinentes pour caractériser le pouvoir fluidifiant des dispersants, sont utilisés dans les exemples ci-dessous, à savoir : la mesure de l'étalement initial d'une galette de mortier additivé de dispersant et la mesure de l'étalement d'une galette de mortier additivé de dispersant en fonction du temps.

On décrit d'abord la mesure de l'étalement initial d'une galette de mortier additivé de dispersant. Le mortier est préparé en présence du dispersant ou fluidifiant, selon des méthodes normalisées et un cône tronqué, creux, de dimensions bien définies, connu par l'homme du métier comme le mini-cône d'Abrams, est rempli avec le mortier ; le cône a une ouverture de remplissage en haut et une ouverture de vidange en bas, le mortier tient à l'intérieur du fait que le cône est posé sur une plaque plate qui obstrue l'ouverture inférieure. Immédiatement après le remplissage, le cône est levé de son support ce qui a pour effet de provoquer l'écoulement du mortier qui se vide sur la plaque plate en s'étalant sur celle-ci sous la forme d'une galette ronde. Plus la préparation de mortier est fluide, plus le mortier s'étalera et plus grand sera le diamètre de la galette. Le diamètre maximal d'étalement de la galette, connu aussi par l'homme du métier comme la valeur de « slump » ou d'étalement, est une mesure assez fiable de la fluidité de la préparation. Cette fluidité peut être variée essentiellement en jouant sur deux paramètres qui sont le rapport Eau/Ciment (rapport E/C) du mortier et le dosage en fluidifiant exprimé en % de matière sèche de dispersant par rapport au ciment (% SP). Plus le rapport E/C est grand ou plus le %SP est élevé, plus le mortier sera fluide et, donc, plus la mesure de diamètre d'étalement (ou « slump ») donnera une valeur élevée

On décrit maintenant la mesure de l'étalement d'une galette de mortier additivé de dispersant en fonction du temps. La procédure ci-dessus permet de connaître la valeur d'étalement (lié à la fluidité du mortier) initial, c'est-à-dire, immédiatement après le remplissage du cône avec le mortier pour la première fois. Le mortier étalé peut, cependant, être récupéré et re-mélangé selon une procédure normalisée et la mesure d'étalement peut être répétée à différents temps comptés à partir du premier étalement ou étalement initial. La fluidité du mortier peut être ainsi suivie sur une période allant, le plus souvent jusqu'à 2 ou 3 heures. Cette mesure permet de connaître le comportement du mortier additivé en termes d'évolution de la fluidité au cours du temps. Il est souvent souhaitable que la fluidité reste la plus élevée possible pour des temps les plus longs possibles jusqu'à la limite de 2 ou 3 heures.

### Exemples

### Exemple 1 (selon l'invention, copolymère par Polymérisation Radicalaire Contrôlée amorcé-contrôlé par l'alcoxyamine MAMA)

Dans un réacteur en verre de 1 L équipé d'un moteur d'agitation à vitesse variable, des entrées pour l'introduction de réactifs, de piquages pour l'introduction de gaz inertes permettant de chasser l'oxygène, comme l'azote, et de sondes de mesure (e.g., de température), d'un système de condensation de vapeurs avec reflux, d'une double enveloppe permettant de chauffer/refroidir le contenu du réacteur grâce à la circulation dans celle-ci, d'un fluide caloporteur, on introduit 70g d'eau déminéralisée, 5,70g d'alcoxyamine MAMA (ARKEMA) et 60 ml d'une solution de soude 0,4N. La solution est dégazée par bullage d'azote dans le liquide. On prépare, par ailleurs, dans un récipient adéquat, un mélange de 277,4g d'une solution aqueuse à 50% de méthacrylate de poly(éthylène)glycol (chaîne latérale de PEG de *M̅n̅*= 2080 g/mol) (ALDRICH), et 11,5g d'acide méthacrylique (ARKEMA) ; le mélange est dégazé à l'azote pendant 10 minutes.

La solution d'alcoxyamine dans le réacteur est alors chauffée à 60°C. Lorsque la température du milieu réactionnel atteint 55°C, le mélange de monomères est alors additionné sur une période de 2 heures, ce qui donne une température dans le réacteur pendant l'ajout autour de 60°C. A la fin de l'addition, la température est maintenue à 60°C pendant 4 heures supplémentaires, puis la solution est refroidie à température ambiante. L'extrait sec final de la solution aqueuse de copolymère dispersant ainsi obtenue, a été mesuré par gravimétrie à 35,65 %. La conversion des monomères en polymère est évaluée à 94% en poids, par SEC. Les masses moléculaires du copolymère en équivalent PEG, déterminées par SEC sont de 20910 g/mole pour la masse au pic de la distribution (Mp), de 19780 pour la masse moléculaire moyenne en nombre (*M̅n̅*) et de 35940 pour la masse moléculaire moyenne en poids (*M̅w̅*).

Pour la mesure du pouvoir fluidifiant du copolymère, on prépare un mortier modèle en partant de 518,5 g de ciment sec de type LUMBRES (CEM I 42,5R) et 1350 g de sable normalisé (CEN EN 196-1), 279,99 g d'eau déminéralisée et 2,54 g de la solution aqueuse de copolymère dispersant, préalablement additivée de 1% en poids par rapport à la matière sèche d'un agent anti-mousse (CLEROL). Les quantités employées font en sorte que le rapport E/C soit ainsi fixé à 0,54 et le dosage en dispersant, %SP, à 0,175% par rapport au ciment. La préparation du mortier et les mesures de fluidité (étalement ou « slumps) se font dans une pièce dans laquelle la température est régulée en permanence à 21 °C avec une tolérance de plus ou moins 2°C.

Le mortier est préparé en mélangeant, d'abord l'eau et la solution de dispersant. Ce mélange constitue l'eau de gâchage qui est introduite, ensuite, dans un malaxeur pour mortier. Après l'ajout du ciment, le malaxeur est mis en route à 65 tours/minute pendant 30 secondes. Après ajout du sable, le malaxeur est, une nouvelle fois, mis en route à 65 tours/minute pendant 30 secondes. Le mélange est malaxé à 125 tours/minutes pendant 30 secondes et laissé au repos, ensuite, pendant 90 secondes. Après ce temps de repos, le malaxage est reconduit à 125 tours/minute pendant 60 nouvelles secondes. Le mortier, ainsi obtenu permet de remplir le mini-cône d'Abrams dont le poids et les dimensions sont les suivantes : poids minimum : 4 kg ; diamètre de l'ouverture supérieure 50 mm, diamètre de l'ouverture inférieure 100 mm, hauteur : 150 mm. Avant le remplissage, le cône est posé sur une plaque de PVC de 50x50 cm pour 1 cm d'épaisseur, humidifiée à l'aide d'une éponge. Le remplissage du cône s'effectue selon une procédure bien définie consistant à remplir en trois fois avec un tiers de la hauteur du cône remplie à chaque fois et le tout sur une durée totale de 2 minutes. De plus, à la fin de chaque tiers de remplissage, et, afin de réduire l'entraînement d'air dans le mortier, le contenu du cône est tassé en le tapotant à l'aide d'une tige métallique de 30 cm de longueur pour 5 mm de diamètre. A la fin des 2 minutes, le cône rempli est soulevé, ce qui provoque l'étalement de son contenu sur la plaque support. La mesure d'étalement est prise 30 secondes après le soulèvement du cône en mesurant la longueur de deux diamètres perpendiculaires de la galette. La moyenne entre ces deux diamètres est la mesure d'étalement initial du mortier. Pour les mesures de fluidité du mortier en fonction du temps, le mortier étalé est récupéré, remis dans le malaxeur et laissé au repos et bien couvert pour éviter l'évaporation d'eau. Lorsque arrive le temps de faire une nouvelle mesure, un malaxage à 125 tours/minute pendant 60 secondes est effectué. Ensuite, le cône est rempli selon la procédure citée, et l'étalement est à nouveau mesuré comme indiqué ci-dessus pour l'étalement initial.

Le Tableau I montre l'évolution de l'étalement en fonction du temps pour le mortier préparé avec le dispersant de cet exemple ; à titre comparatif, ce tableau présente, également, les performances d'un mortier préparé dans les mêmes conditions et avec les mêmes valeurs de E/C et de %SP à partir d'un dispersant commercial (ECOCRYL 5930 de Cray Valley).

### Exemple 2 (selon l'invention ; copolymères obtenus par Polymérisation Radicalaire Contrôlée avec l'alcoxyamine MAMA et par Polymérisation Radicalaire Classique avec du Persulfate d'ammonium)

Dans un réacteur en verre de 1L équipé comme celui de l'Exemple 1, on introduit 120g d'eau déminéralisée, 1,15g d'alcoxyamine MAMA (ARKEMA) et 12 ml d'une solution de soude 0,4N. La solution est dégazée par bullage d'azote dans le liquide. On prépare, par ailleurs, dans un récipient adéquat, un mélange de 277,4 g d'une solution aqueuse à 50% de méthacrylate de poly(éthylène)glycol (chaîne latérale de PEG de *M̅n̅* = 2080 g/mol) (ALDRICH), et 11,5g d'acide méthacrylique (ARKEMA) ; le mélange est dégazé à l'azote pendant 10 minutes.

La solution d'alcoxyamine dans le réacteur est alors chauffée à 60°C. Lorsque la température du milieu réactionnel atteint 60 °C le mélange de monomères est alors additionné sur une période de 2 heures. A la fin de l'addition, la température est maintenue à 60°C pendant 4 heures supplémentaires, puis la solution est refroidie à température ambiante. L'extrait sec de la solution aqueuse de copolymère dispersant ainsi obtenue a été mesuré par gravimétrie à 35,4%. La conversion des monomères en polymère est évaluée à 69% en poids, par SEC. Les masses moléculaires du copolymère obtenu avec l'alcoxyamine MAMA en équivalent PEG, déterminées par SEC sont de 29760 g/mole pour Mp, 29110 g/mole pour *M̅n̅* et 56120 g/mole pour *M̅w̅*.

On additionne alors 0,22g de persulfate d'ammonium (ALDRICH) pour convertir les monomères résiduels. Le milieu réactionnel est chauffé à 75°C pendant 4 heures, puis est refroidi à température ambiante. L'extrait sec final de la solution aqueuse de copolymère dispersant, ainsi obtenue, a été mesuré par gravimétrie à 33,6%. La conversion a été évaluée à 97 % en poids, par SEC. Les masses moléculaires globales du mélange de copolymères obtenus par Polymérisation Radicalaire Contrôlée et Classique en équivalent PEG, déterminées par SEC sont de 59640 g/mole pour Mp, de 38280 pour *M̅n̅* et de 134500 pour *M̅w̅*.

Pour la mesure du pouvoir fluidifiant du copolymère, on suit la procédure décrite dans l'exemple 1, et on se place dans les mêmes conditions expérimentales. Le mortier est préparé en partant de 518,5 g de ciment sec de type LUMBRES et 1350 g de sable normalisé (CEN EN 196-1), 279,99 g d'eau déminéralisée et 2,70 g de la solution aqueuse de copolymère dispersant, préalablement additivée de 1% en poids par rapport à la matière sèche d'un agent anti-mousse (CLEROL). Le Tableau II montre l'évolution de l'étalement en fonction du temps pour le mortier préparé avec le dispersant de cet exemple ; à titre comparatif, ce tableau présente, également, les performances d'un mortier préparé dans les mêmes conditions et avec les mêmes valeurs de E/C et de %SP à partir d'un dispersant commercial (ECOCRYL 5930 de Cray Valley).

### Exemple 3 (selon l'invention ; copolymères obtenus par Polymérisation Radicalaire Contrôlée avec l'alcoxyamine MAMA et par Polymérisation Radicalaire Classique avec du Persulfate d'ammonium)

Dans un réacteur en verre de 1 L équipé comme celui de l'Exemple 1,on introduit 120g d'eau déminéralisée, 2,29g d'alcoxyamine MAMA (ARKEMA) et 24 ml d'une solution de soude 0,4N. La solution est dégazée par bullage d'azote dans le liquide. On prépare, par ailleurs, dans un récipient adéquat, un mélange de 277,4 g d'une solution aqueuse à 50% de méthacrylate de poly(éthylène)glycol (chaîne latérale de PEG de *M̅n̅* = 2080 g/mol) (ALDRICH), et 11,5g d'acide méthacrylique (ARKEMA); le mélange est dégazé à l'azote pendant 10 minutes.

La solution d'alcoxyamine dans le réacteur est alors chauffée à 60°C. Lorsque la température du milieu réactionnel atteint 60°C le mélange de monomères est alors additionné sur une période de 2 heures. A la fin de l'addition, la température est maintenue à 60°C pendant 4 heures supplémentaires, puis la solution est refroidie à température ambiante. L'extrait sec de la solution aqueuse de copolymère dispersant ainsi obtenue a été mesuré par gravimétrie à 34,5%. La conversion des monomères en polymère est évaluée à 67% en poids, par SEC. Les masses moléculaires du copolymère obtenu avec l'alcoxyamine MAMA en équivalent PEG, déterminées par SEC sont de 16630 g/mole pour Mp, 15990 g/mole pour *M̅n̅* et 21310 g/mole pour *M̅w̅.*

On additionne alors 0,45g de persulfate d'ammonium (ALDRICH) pour convertir les monomères résiduels. Le milieu réactionnel est chauffé à 75°C pendant 4 heures, puis est refroidi à température ambiante. L'extrait sec final de la solution aqueuse de copolymère dispersant, ainsi obtenue a été mesuré par gravimétrie à 34,8 %. La conversion a été évaluée à 97 % en poids, par SEC. Les masses moléculaires globales du mélange de copolymères obtenus par Polymérisation Radicalaire Contrôlée et Classique en équivalent PEG, déterminées par SEC sont de 18800 g/mole pour Mp, de 19060 pour *M̅n̅* et de 40380 pour *M̅w̅*.

Pour la mesure du pouvoir fluidifiant du copolymère, on suit la procédure décrite dans l'exemple 1, et on se place dans les mêmes conditions expérimentales. Le mortier est préparé en partant de 518,5 g de ciment sec de type LUMBRES et 1350 g de sable normalisé (CEN EN 196-1), 279,99 g d'eau déminéralisée et 2,61 g de la solution aqueuse de copolymère dispersant, préalablement additivée de 1% en poids par rapport à la matière sèche d'un agent anti-mousse (CLEROL). L'étalement initial du mortier obtenu avec le dispersant de cet exemple a été supérieur aux 370 mm, ce qui met en évidence un haut pouvoir fluidifiant.

### Contre-exemple 1 (la fraction de monomères non convertie est trop élevée)

Dans un réacteur en verre de 1 L équipé comme celui de l'Exemple 1, on introduit 123g d'eau déminéralisée, 3,45g d'alcoxyamine MAMA (ARKEMA), 36 ml d'une solution de soude 0,4N., 416 g d'une solution aqueuse à 50% de méthacrylate de poly(éthylène)glycol (chaîne latérale de PEG de *M̅n̅*= 2080 g/mol) (ALDRICH), 17,2g d'acide méthacrylique (ARKEMA). La solution est dégazée à l'azote pendant 10 minutes, puis chauffée à 85°C. La température est maintenue à 85°C pendant 7 heures, puis la solution est refroidie à température ambiante. L'extrait sec de la solution aqueuse de copolymère dispersant ainsi obtenue, a été mesuré par gravimétrie à 36,71%. La conversion des monomères en polymère est évaluée à 82% en poids, par SEC. Les masses moléculaires du copolymère obtenu avec l'alcoxyamine MAMA en équivalent PEG, déterminées par SEC sont de 12370 g/mole pour Mp, 12710 g/mole pour *M̅n̅* et 20670 g/mole pour *M̅w̅*.

Pour la mesure du pouvoir fluidifiant du copolymère, on suit la procédure décrite dans l'exemple 1, et on se place dans les mêmes conditions expérimentales. Le mortier est préparé en partant de 518,5 g de ciment sec de type LUMBRES et 1350 g de sable normalisé (CEN EN 196-1), 279,99 g d'eau déminéralisée et 2,47 g de la solution aqueuse de copolymère dispersant, préalablement additivée de 1% en poids par rapport à la matière sèche d'un agent anti-mousse (CLEROL). Le Tableau III montre l'évolution de l'étalement en fonction du temps pour le mortier préparé avec le dispersant de cet exemple ; ces performances sont à comparer à celles des mortiers des Tableaux I et II.

### Contre-exemple 2 (la fraction de monomères non convertie est trop élevée)

Dans un réacteur en verre de 1L équipé comme celui de l'Exemple 1,on introduit 150g d'eau déminéralisée, 0,86g d'alcoxyamine MAMA (ARKEMA), 9 ml d'une solution de soude 0.4N., 416 g d'une solution aqueuse à 50% de méthacrylate de poly(éthylène)glycol (chaîne latérale de PEG de *M̅n̅*= 2080 g/mol) (ALDRICH), 17,2g d'acide méthacrylique (ARKEMA). La solution est dégazée à l'azote pendant 10 minutes, puis chauffée à 85°C. La température est maintenue à 85°C pendant 7 heures, puis la solution est refroidie à température ambiante. L'extrait sec de la solution aqueuse de copolymère dispersant ainsi obtenue, a été mesuré par gravimétrie à 36,06 %. La conversion des monomères en polymère est évaluée à 63% en poids, par SEC. Les masses moléculaires du copolymère obtenu avec l'alcoxyamine MAMA en équivalent PEG, déterminées par SEC sont de 53670 g/mole pour Mp, 43170 g/mole pour *M̅n̅* et 117900 g/mole pour *M̅w̅*.

Pour la mesure du pouvoir fluidifiant du copolymère, on suit la procédure décrite dans l'exemple 1, et on se place dans les mêmes conditions expérimentales. Le mortier est préparé en partant de 518,5 g de ciment sec de type LUMBRES et 1350 g de sable normalisé (CEN EN 196-1), 279,99 g d'eau déminéralisée et 2,51 g de la solution aqueuse de copolymère dispersant, préalablement additivée de 1% en poids par rapport à la matière sèche d'un agent anti-mousse (CLEROL). Le Tableau III montre l'évolution de l'étalement en fonction du temps pour le mortier préparé avec le dispersant de cet exemple ; ces performances sont à comparer à celles des mortiers des Tableaux I et II.

**Tableau I**

| Dispersant | Temps (min) | Etalement (mm) |
|---|---|---|
| Référence commerciale Ecocryl 5930 | 0 | 296 |
| | 30 | 290 |
| | 60 | 286 |
| | 90 | 274 |
| | 120 | 263 |
| Dispersant de l'exemple 1 | 0 | 327 |
| | 30 | 313 |
| | 60 | 310 |
| | 90 | 308 |
| | 120 | 289 |

**Tableau II**

| Dispersant | Temps (min) | Etalement (mm) |
|---|---|---|
| Référence commerciale Ecocryl 5930 | 0 | 283 |
| | 30 | 277 |
| | 60 | 270 |
| | 90 | 263 |
| | 120 | 253 |
| Dispersant de l'exemple 2 | 0 | 332 |
| | 30 | 320 |
| | 60 | 322 |
| | 90 | 312 |
| | 120 | 303 |

**Tableau III**

| Dispersant | Temps (min) | Etalement (mm) |
|---|---|---|
| Dispersant du contre-exemple 1 | 0 | 238 |
| | 30 | 227 |
| | 60 | 213 |
| | 90 | 207 |
| | 120 | 197 |
| Dispersant du contre-exemple 2 | 0 | 246 |
| | 30 | 238 |
| | 60 | 222 |
| | 90 | 215 |
| | 120 | 212 |

## Revendications

1. Procédé de préparation en solution aqueuse de polymères acryliques hydrosolubles dans lequel on copolymérise, le total des comonomères étant 100% en moles:
5 à 70 % de monomère(s) (A) de la famille des (méth)acrylates de (alkoxy)polyalkylène glycol et/ou de la famille des (méth)acrylamides de (alkoxy)polyalkylène glycol,
5 à 95 % de monomère(s) (B) carboxylique(s) insaturé(s),
0 à 85 % de monomère(s) (C) hydrophobe(s) peu soluble(s) dans l'eau,
en l'absence d'agent de transfert de chaîne,
en présence d'une quantité suffisante d'une alcoxyamine soluble dans l'eau jusqu'à obtenir une conversion d'au moins 90%, en poids des monomères (A), (B) et (C).

2. Procédé selon la revendication 1 dans lequel la conversion des monomères (A), (B) et (C) est d'au moins 93%.

3. Procédé de préparation en solution aqueuse de polymères acryliques hydrosolubles dans lequel on copolymérise, le total des comonomères étant 100% en moles:
5 à 70 % de monomère(s) (A) de la famille des (méth)acrylates de (alkoxy)polyalkylène glycol et/ou de la famille des (méth)acrylamides de (alkoxy)polyalkylène glycol,
5 à 95 % de monomère(s) (B) carboxylique(s) insaturé(s),
0 à 85 % de monomère(s) (C) hydrophobe(s) peu soluble(s) dans l'eau,
en l'absence d'agent de transfert de chaîne,
en présence d'une quantité suffisante d'une alcoxyamine soluble dans l'eau jusqu'à obtenir une conversion d'au moins 50% en poids des monomères (A), (B) et (C),
puis on termine la polymérisation en présence d'un initiateur radicalaire conventionnel,
éventuellement en présence d'un agent de transfert de chaîne,
jusqu'à obtenir une conversion d'au moins 90% en poids des monomères (A), (B) et (C).

4. Procédé selon la revendication 3 dans lequel la conversion en poids des monomères (A), (B) et (C) en présence d'alcoxyamine est d'au moins 60%.

5. Procédé selon la revendication 3 ou 4 dans lequel la conversion en poids des monomères (A), (B) et (C) en présence de l'initiateur radicalaire conventionnel est d'au moins 93%.

6. Procédé selon l'une quelconque des revendications précédentes dans lequel les proportions des monomères sont :
5 à 50 % de monomère(s) (A),
20 à 95% de monomère(s) (B),
0 à 65% de monomère(s) (C).

7. Procédé selon l'une quelconque des revendications précédentes dans lequel dans (A) la masse moléculaire moyenne *M̅n̅* de la chaîne latérale de polyalkylène glycol est comprise entre 350 et 10000 g/mole.

8. Procédé selon la revendication 7 dans lequel la masse moléculaire moyenne *M̅n̅* de la chaîne latérale de polyalkylène glycol est comprise entre 1000 et 6000 g/mole.

9. Procédé selon l'une quelconque des revendications 1 à 6 dans lequel (A) est choisi parmi l'acrylate et le méthacrylate de méthoxypolyéthylène glycol de chaîne latérale polyéthylène glycol de masse molaire moyenne en nombre comprise entre 900 et 5100.

10. Procédé selon la revendication 9 dans lequel la masse molaire moyenne en nombre est comprise entre 1800 et 2200.

11. Procédé selon l'une quelconque des revendications précédentes dans lequel (B) est choisi parmi l'acide acrylique et l'acide méthacrylique.

12. Procédé selon l'une quelconque des revendications précédentes dans lequel (C) est choisi parmi les méthacrylates d'alkyle.

13. Procédé selon l'une quelconque des revendications précédentes dans lequel l'alcoxyamine utilisée est choisie parmi l'acide 2-Methyl-2-[N-tertbutyl-N-(diéthoxy-phosphoryl-2,2-diméthylpropyl) aminoxy] propionique et ses sels métalliques et ammoniacaux.

## Claims

1. Process for the preparation in aqueous solution of water-soluble acrylic polymers or for the preparation in aqueous dispersion of water-dispersible acrylic polymers, process in which the following are copolymerized, the total of the comonomers being 100 mol%:
5 to 70% of monomer(s) (A) of the family of the (alkoxy)polyalkylene glycol (meth)acrylates and/or of the family of the ((alkoxy)polyalkylene glycol)(meth)acrylamides,
5 to 95% of unsaturated carboxylic monomer(s) (B),
0 to 85% of hydrophobic monomer(s) (C) which is (are) not very soluble in water,
in the absence of a chain-transfer agent,
in the presence of a sufficient amount of a water-soluble alkoxyamine, until a conversion of at least 90% by weight of the monomers (A), (B) and (C) is obtained.

2. Process according to Claim 1, in which the conversion of the monomers (A), (B) and (C) is at least 93%.

3. Process for the preparation in aqueous solution of water-soluble acrylic polymers or for the preparation in aqueous dispersion of water-dispersible acrylic polymers, process in which the following are copolymerized, the total of the comonomers being 100 mol%:
5 to 70% of monomer(s) (A) of the family of the (alkoxy)polyalkylene glycol (meth)acrylates and/or of the family of the ((alkoxy)polyalkylene glycol)(meth)acrylamides,
5 to 95% of unsaturated carboxylic monomer(s) (B),
0 to 85% of hydrophobic monomer(s) (C) which is (are) not very soluble in water,
in the absence of a chain-transfer agent,
in the presence of a sufficient amount of a water-soluble alkoxyamine, until a conversion of at least 50% by weight of the monomers (A), (B) and (C) is obtained, then the polymerization is terminated in the presence of a conventional radical initiator, optionally in the presence of a chain-transfer agent,
until a conversion of at least 90% by weight of the monomers (A), (B) and (C) is obtained.

4. Process according to Claim 3, in which the conversion by weight of the monomers (A), (B) and (C) in the presence of alkoxyamine is at least 60%.

5. Process according to Claim 3 or 4, in which the conversion by weight of the monomers (A), (B) and (C) in the presence of the conventional radical initiator is at least 93%.

6. Process according to any one of the preceding claims, in which the proportions of the monomers are:
5 to 50% of monomer(s) (A),
20 to 95% of monomer(s) (B),
0 to 65% of monomer(s) (C).

7. Process according to any one of the preceding claims, in which, in (A), the average molecular mass *M̅n̅* of the polyalkylene glycol side chain is between 350 and 10 000 g/mol.

8. Process according to Claim 7, in which the average molecular mass *M̅n̅* of the polyalkylene glycol side chain is between 1000 and 6000 g/mol.

9. Process according to any one of Claims 1 to 6, in which (A) is chosen from methoxypolyethylene glycol acrylate and methacrylate with a polyethylene glycol side chain with a number-average molar mass of between 900 and 5100.

10. Process according to Claim 9, in which the number-average molar mass is between 1800 and 2200.

11. Process according to any one of the preceding claims, in which (B) is chosen from acrylic acid and methacrylic acid.

12. Process according to any one of the preceding claims, in which (C) is chosen from alkyl methacrylates.

13. Process according to any one of the preceding claims, in which the alkoxyamine used is chosen from 2-methyl-2-[N-tert-butyl-N-(diethoxy-phosphoryl-2,2-dimethylpropyl)aminoxy]propionic acid and its metal and ammoniacal salts.

## Patentansprüche

1. Verfahren zur Herstellung von wasserlöslichen Acrylpolymeren in wäßriger Lösung oder zur Herstellung von wasserdispergierbaren Acrylpolymeren in wäßriger Dispersion, bei dem man
5 bis 70% Monomer(e) A aus der Familie der (Alkoxy)polyalkylenglykol(meth)acrylate und/oder der Familie der ((Alkoxy)polyalkylenglykol)(meth)-acrylamide,
5 bis 95% ungesättigte(s) Carboxylmonomer(e) (B), 0 bis 85% hydrophobe(s) Monomer(e) (C), das bzw. die in Wasser wenig löslich sind,
wobei sich die Summe der Comonomere auf 100 Mol-% beläuft,
in Abwesenheit eines Kettenübertragungsmittels in Gegenwart einer ausreichenden Menge eines wasserlöslichen Alkoxyamins bis zu einem Umsatz von mindestens 90 Gew.-% der Monomere (A), (B) und (C) copolymerisiert.

2. Verfahren nach Anspruch 1, bei dem der Umsatz der Monomere (A), (B) und (C) mindestens 93 Gew.-% beträgt.

3. Verfahren zur Herstellung von wasserlöslichen Acrylpolymeren in wäßriger Lösung oder zur Herstellung von wasserdispergierbaren Acrylpolymeren in wäßriger Dispersion, bei dem man
5 bis 70% Monomer(e) A aus der Familie der (Alkoxy)polyalkylenglykol(meth)acrylate und/oder der Familie der ((Alkoxy)polyalkylenglykol)(meth)-acrylamide,
5 bis 95% ungesättigte(s) Carboxylmonomer(e) (B),
0 bis 85% hydrophobe(s) Monomer(e) (C), das bzw.
die in Wasser wenig löslich sind, wobei sich die Summe der Comonomere auf 100 Mol-% beläuft,
in Abwesenheit eines Kettenübertragungsmittels in Gegenwart einer ausreichenden Menge eines wasserlöslichen Alkoxyamins bis zu einem Umsatz von mindestens 50 Gew.-% der Monomere (A), (B) und (C) copolymerisiert
und dann die Polymerisation in Gegenwart eines herkömmlichen radikalischen Initiators terminiert, gegebenenfalls in Gegenwart eines Kettenübertragungsmittels,
bis man einen Umsatz von mindestens 90 Gew.-% der Monomere (A), (B) und (C) erhält.

4. Verfahren nach Anspruch 3, bei dem der Umsatz der Monomere (A), (B) und (C) in Gegenwart von Alkoxyamin mindestens 60 Gew.-% beträgt.

5. Verfahren nach Anspruch 3 oder 4, bei dem der Umsatz der Monomere (A), (B) und (C) in Gegenwart des radikalischen Initiators mindestens 93 Gew.-% beträgt.

6. Verfahren nach einem der vorhergehenden Ansprüche, bei dem die Monomere in den folgenden Anteilen vorliegen:
5 bis 50% Monomer(e) (A),
20 bis 95% Monomer(e) (B),
0 bis 65% Monomer(e) (C).

7. Verfahren nach einem der vorhergehenden Ansprüche, bei dem in (A) die mittlere Molmasse *M̅n̅* der Polyalkylenglykol-Seitenkette zwischen 350 und 10.000 g/mol liegt.

8. Verfahren nach Anspruch 7, bei dem die mittlere Molmasse *M̅n̅* der Polyalkylenglykol-Seitenkette zwischen 1000 und 6000 g/mol liegt.

9. Verfahren nach einem der Ansprüche 1 bis 6, bei dem man (A) unter Methoxypolyethylenglykolacrylat und -methacrylat mit einer Polyethylenglykol-Seitenkette mit einer zahlenmittleren Molmasse zwischen 900 und 5100 auswählt.

10. Verfahren nach Anspruch 9, bei dem die zahlenmittlere Molmasse zwischen 1800 und 2200 liegt.

11. Verfahren nach einem der vorhergehenden Ansprüche, bei dem man (B) unter Acrylsäure und Methacrylsäure auswählt.

12. Verfahren nach einem der vorhergehenden Ansprüche, bei dem man (C) unter Alkyl(meth)acrylaten auswählt.

13. Verfahren nach einem der vorhergehenden Ansprüche, bei dem man das verwendete Alkoxyamin unter 2-Methyl-2-[N-tert.-butyl-N-(diethoxyphosphoryl-2,2-dimethylpropyl)aminoxy]propionsäure und deren Metall- und Ammoniaksalzen auswählt.
